# EUROPÄISCHE PATENTSCHRIFT

(11) **EP 3 534 766 B1**
(45) Veröffentlichungstag und Bekanntmachung des Hinweises auf die Patenterteilung: **13.10.2021**
(21) Anmeldenummer: 17800728.2
(22) Anmeldetag: 31.10.2017
(51) Int. Cl.: A47L 5/36, A47L 7/00, B22D 17/30, A47L 9/14, B28D 7/02

(54) **FLANSCHEINRICHTUNG FÜR EINE FILTERVORRICHTUNG**
FLANGE DEVICE FOR A FILTER DEVICE
DISPOSITIF DE BRIDE POUR UN DISPOSITIF DE FILTRE

(30) Priorität: 07.11.2016 EP 16197481
(43) Veröffentlichungstag der Anmeldung: 11.09.2019
(73) Patentinhaber: Hilti Aktiengesellschaft, 9494 Schaan (LI)
(72) Erfinder: RUPPRECHT, Hans, 81477 Muenchen (DE)
(74) Vertreter: Hilti Aktiengesellschaft Corporate Intellectual Property
(86) Internationale Anmeldenummer: PCT/EP2017/077900
(87) Internationale Veröffentlichungsnummer: WO 2018/083090

(56) Entgegenhaltungen:
- EP-A1- 2 960 012
- DE-A1-102005 041 811
- DE-U1- 29 821 276
- DE-U1- 29 821 276
- DE-U1-202008 001 391
- DE-U1-202008 001 391

## Beschreibung

Die vorliegende Erfindung betrifft eine Flanscheinrichtung für eine Filtereinrichtung zum Positionieren in einem Wasseraufbereitungsgerät, wobei das Wasseraufbereitungsgerät einen Wasserspeicher sowie einen Saugkopf enthält.

Wasseraufbereitungsgeräte stellen ein Wasserrecyclingsystem dar, bei dem Wasser in einem geschlossenen Kreislauf mit einer Kernbohrmaschine oder einer Kreissäge zirkuliert. Gemäß einer alternativen Arbeitsweise des Wasseraufbereitungsgerätes ist es jedoch auch möglich, dass Wasser nicht in einem Kreislauf mit den Werkzeugmaschinen zirkuliert, sondern lediglich von dem Wasseraufbereitungsgerät zu den Werkzeugmaschinen befördert wird. Bei der Verwendung von Kernbohrmaschinen oder Kreissägen zum Zerschneiden eines mineralischen Werkstoffs, beispielsweise Beton oder Stein, ist es notwendig das Werkzeug, d.h. die Bohrkrone oder das Sägeblatt, zu kühlen und zu spülen. Das Spülen des Werkzeugs dient dazu, Staub und Schlamm, der bei der Bearbeitung des Werkstoffs entsteht, von dem Werkzeug abzuwaschen. Für gewöhnlich wird das Werkzeug einer Kernbohrmaschine oder einer Kreissäge mit Wasser gekühlt und gespült. Das Wasser wird hierfür in einem Wasseraufbereitungsgerät zur Verfügung gestellt. In einem Aufnahmebehälter des Wasseraufbereitungsgeräts ist Wasser gespeichert. Der Aufnahmebehälter kann auch als Wasserspeicher bezeichnet werden. Mit Hilfe einer Wasserpumpe, die sich in einem sogenannten Saugkopf des Wasseraufbereitungsgeräts befindet und für gewöhnlich oberhalb des Wasserspeichers positioniert ist, wird das Wasser über eine Wasserleitung (Wasserschlauch) zu den Werkzeugen befördert. Das Wasser verläuft in einem Kreislauf, sodass das Wasser in einer zweiten Wasserleitung (Wasserschlauch) wieder zu dem Wasseraufbereitungsgerät zurückbefördert wird, nachdem die Werkzeuge (Bohrkrone oder Sägeblatt) gekühlt und gespült wurden. Durch das Kühlen und Spülen des Werkzeugs verschmutzt jedoch das Wasser mit Staub und Schlamm, der sich während der Bearbeitung des Werkstoffs bildet. Um die Komponenten und insbesondere die Pumpe des Wasseraufbereitungsgeräts nicht durch den Staub oder Schlamm zu beschädigen, muss das verschmutzte Wasser gefiltert werden. Hierzu befindet sich in dem Wasseraufbereitungsgerät eine Filtereinrichtung. Für gewöhnlich ist die Filtereinrichtung in Form eines Filterbeutels ausgestaltet, durch den das Wasser gefiltert wird, bevor es wieder in den Wasserspeicher gelangt und wieder von der Pumpe des Saugkopfes zu den Werkzeugen gefördert werden kann. Um Beschädigungen an dem Wasseraufbereitungsgerät oder an einzelnen Komponenten des Wasseraufbereitungsgeräts, insbesondere der Pumpe, zu vermeiden, darf kein verschmutztes Wasser durch die Pumpe gefördert werden.

Um die Filtereinrichtung in dem Wasseraufbereitungsgerät zu befestigen, ist eine Flanscheinrichtung vorgesehen. Mit Hilfe der Flanscheinrichtung wird die Filtereinrichtung wieder lösbar an einer Innenseite des Wasserspeichers angebracht. Neben der Funktion Schmutz und Unreinheiten aus dem Wasser zu filtern muss die Filtereinrichtung eine Vielzahl an weiteren Funktionen erfüllen. So müssen beispielsweise eine ordnungsgemäße Positionierung der Filtereinrichtung in dem Wasseraufbereitungsgerät, eine einfache Entnahme- und Transportmöglichkeit sowie eine Verschlussmöglichkeit, insbesondere für eine gefüllte Filtereinrichtung, vorgesehen sein.

Bei den auf dem Markt befindlichen Filtereinrichtungen bzw. bei den Filtereinrichtungen gemäß dem Stand der Technik sind jedoch diese weiteren (vorstehend genannten) Funktionen entweder nicht vorgesehen oder sehr aufwendig verwirklicht.

Beispielsweise ist ein Staubsaugerbeutel mit einem Kunststoffflansch aus der DE 10 2015 041 811 A1 bekannt.

Aufgabe der vorliegenden Erfindung ist es daher, das vorstehend genannte Problem zu lösen, sodass eine Filtereinrichtung für eine Wasseraufbereitungsgerät bereitgestellt werden kann, die auf einfache Art und Weise eine Vielzahl an zusätzlichen Funktionen enthält.

Die Aufgabe wird gelöst durch den Gegenstand des unabhängigen Anspruchs 1. Eine vorteilhafte Ausführungsform des erfindungsgemäßen Gegenstands ist abhängigen Anspruch enthalten.

Die Aufgabe wird dabei gelöst durch das Bereitstellen einer Flanscheinrichtung für eine Filtereinrichtung zum Positionieren in einem Wasseraufbereitungsgerät, wobei das Wasseraufbereitungsgerät einen Wasserspeicher sowie einen Saugkopf enthält. Hierdurch sind zusätzliche Funktionen in der Flanscheinrichtung in Form eines einzigen Bauteils integriert, sodass Platz und Kosten gespart werden können sowie die Praktikabilität der Flanscheinrichtung erhöht.

Erfindungsgemäß ist vorgesehen, dass die Flanscheinrichtung eine Grundplatte mit einer zentralen Aussparung zur Aufnahme eines Einfüllstutzens des Saugkopfes, eine Verbindungseinrichtung zum lösbaren Verbinden der Flanscheinrichtung an einer Innenseite des Wasserspeichers, ein Verschlusselement zum Verschließen der Aussparung und eine Handgriffeinrichtung zum Ablösen der Verbindungseinrichtung aus der Halteeinrichtung und zum Tragen der Filtereinrichtung enthält. Hierdurch sind weitere Zusatzfunktionen in der Flanscheinrichtung zur weiteren Erhöhung der Praktikabilität aufgenommen.

Die Filtereinrichtung kann auch nur als Filter bezeichnet werden.

Gemäß einer vorteilhaften Ausführungsform der vorliegenden Erfindung kann es möglich sein, dass die Handgriffeinrichtung ein erstes Armelement, ein zweites Armelement sowie ein Griffelement enthält, wobei das erste Armelement an einem ersten Ende über ein erstes Scharnier und das zweite Armelement an einem ersten Ende mit einem zweiten Scharnier mit der Grundplatte beweglich verbunden ist und wobei das erste Armelement an einem zweiten Ende über ein drittes Scharnier und das zweite Armelement an einem zweiten Ende mit einem vierten Scharnier mit dem Griffelement beweglich verbunden ist. Hierdurch kann die Handgriffeinrichtung entweder flach angeordnet werden, wenn sich die Filtereinrichtung mit der Flanscheinrichtung in dem Wasseraufbereitungsgerät befindet, oder in einem Winkel aufgestellt werden, sodass ein Anwender die Filtereinrichtung zusammen mit der Flanscheinrichtung aus dem Wasseraufbereitungsgerät zu entfernen. Das Griffelement ist hiermit relativ zu der Grundplatte aufstellbar, um den Tragekomfort zu erhöhen.

Entsprechend einer weiteren vorteilhaften Ausführungsform der vorliegenden Erfindung kann eine Endpositionsanzeige vorgesehen sein enthaltend einen ersten Längssteg und einen zweiten Längssteg, wobei sowohl der erste als auch der zweite Längssteg so auf der Grundplatte angeordnet sind, dass der erste und zweite Längssteg an einer Flanschhaltevorrichtung des Wasserspeichers angrenzen, wenn die Flanscheinrichtung in der Flanschhaltevorrichtung positioniert ist. Hierdurch kann dem Anwender des Wasseraufbereitungsgeräts auf einfache Art und Weise angezeigt werden, ob die Flanscheinrichtung ordnungsgemäß in dem Wasseraufbereitungsgerät positioniert ist. Nicht ordnungsgemäß positionierte Flanscheinrichtungen können dazu führen, dass das Wasser nicht durch die Filtereinrichtung, sondern direkt und ungefiltert in den Wasserspeicher gelangt. Weitere Vorteile ergeben sich aus der folgenden Figurenbeschreibung. In den Figuren sind verschiedene Ausführungsbeispiele der vorliegenden Erfindung dargestellt.

In den Figuren sind gleiche und gleichartige Komponenten mit gleichen Bezugszeichen beziffert. Es zeigen:
- Fig. 1: eine perspektivische Ansicht eines Wasseraufbereitungsgeräts mit einem Saugkopf und einem Wasserspeicher in eine demontierten Zustand;
- Fig. 2: eine perspektivische Ansicht des Saugkopfes des Wasseraufbereitungsgeräts;
- Fig. 3: eine perspektivische Ansicht des Wasserspeichers des Wasseraufbereitungsgeräts in einer ersten Ausrichtung;
- Fig. 4: eine perspektivische Ansicht des Wasserspeichers des Wasseraufbereitungsgeräts in einer zweiten Ausrichtung;
- Fig. 5: eine Filtereinrichtung in Form eines Filterbeutels zusammen mit einer Flanscheinrichtung und einer Flanschhalteeinrichtung;

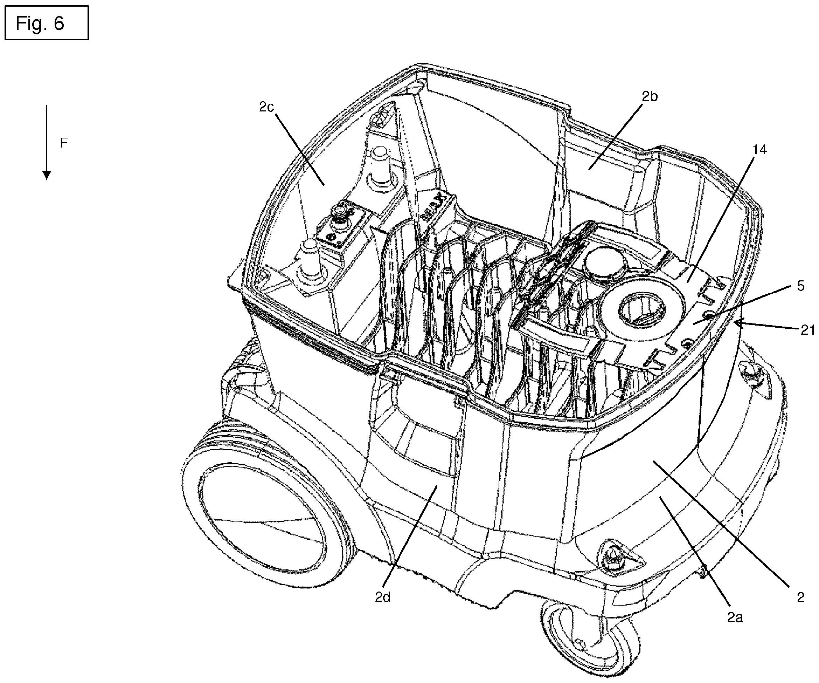

- Fig. 6: eine erste perspektivische Ansicht des Wasserspeichers zusammen mit einer Flanscheinrichtung der Filtereinrichtung;
- Fig. 7: eine zweite perspektivische Ansicht des Wasserspeichers zusammen mit einer Flanscheinrichtung der Filtereinrichtung;
- Fig. 8: eine erste Unteransicht eines Teils des Saugkopfes;
- Fig. 9: eine zweite Unteransicht eines Teils des Saugkopfes zusammen mit der Flanscheinrichtung der Filtereinrichtung;

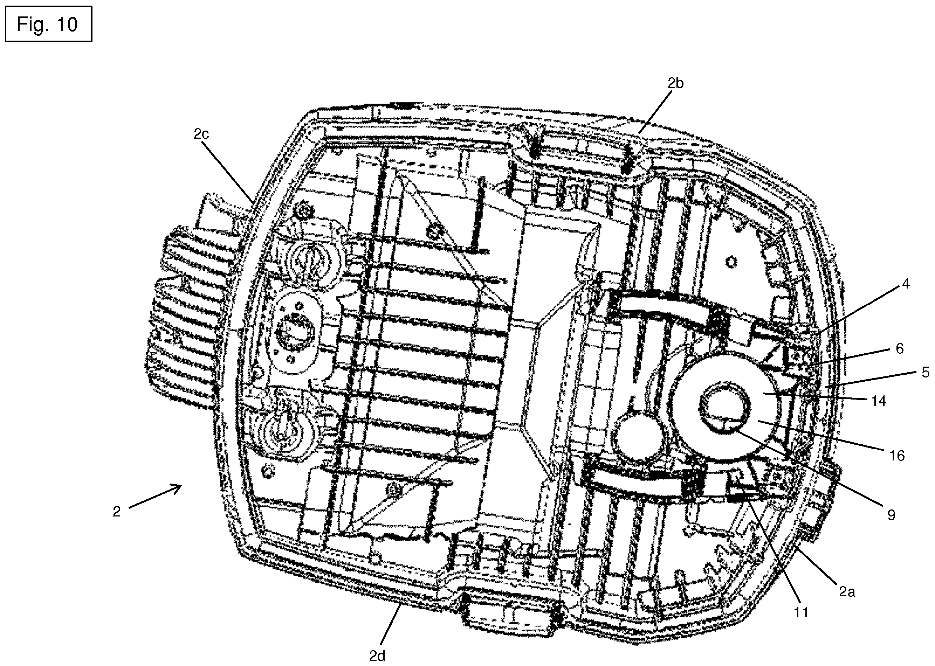

- Fig. 10: eine ganzheitliche Unteransicht auf den Saugkopf zusammen mit der Flanscheinrichtung der Filtereinrichtung;
- Fig. 11: eine Draufsicht auf die Flanscheinrichtung der Filtereinrichtung;
- Fig. 12: eine Unteransicht auf die Flanscheinrichtung der Filtereinrichtung;
- Fig. 13: eine perspektivische Ansicht auf die Oberseite der Flanscheinrichtung der Filtereinrichtung zusammen mit einer Flanschhalteeinrichtung;
- Fig. 14: eine perspektivische Ansicht auf die Unterseite der Flanscheinrichtung der Filtereinrichtung zusammen mit der Flanschhalteeinrichtung;
- Fig. 15: eine perspektivische Ansicht auf die Flanschhalteeinrichtung; und

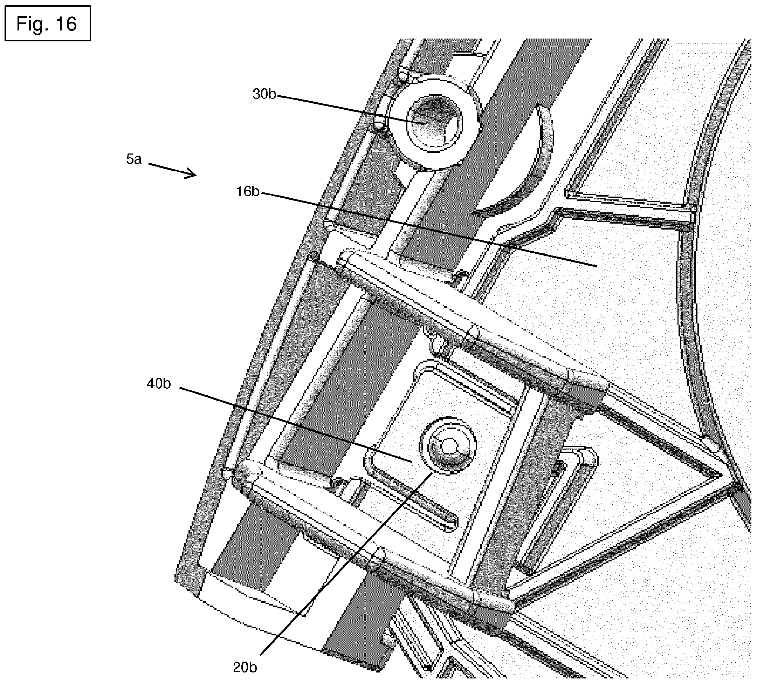

- Fig. 16: eine Detailansicht auf die Flanschhalteeinrichtung mit der Flanscheinrichtung.

### Ausführungsbeispiele:

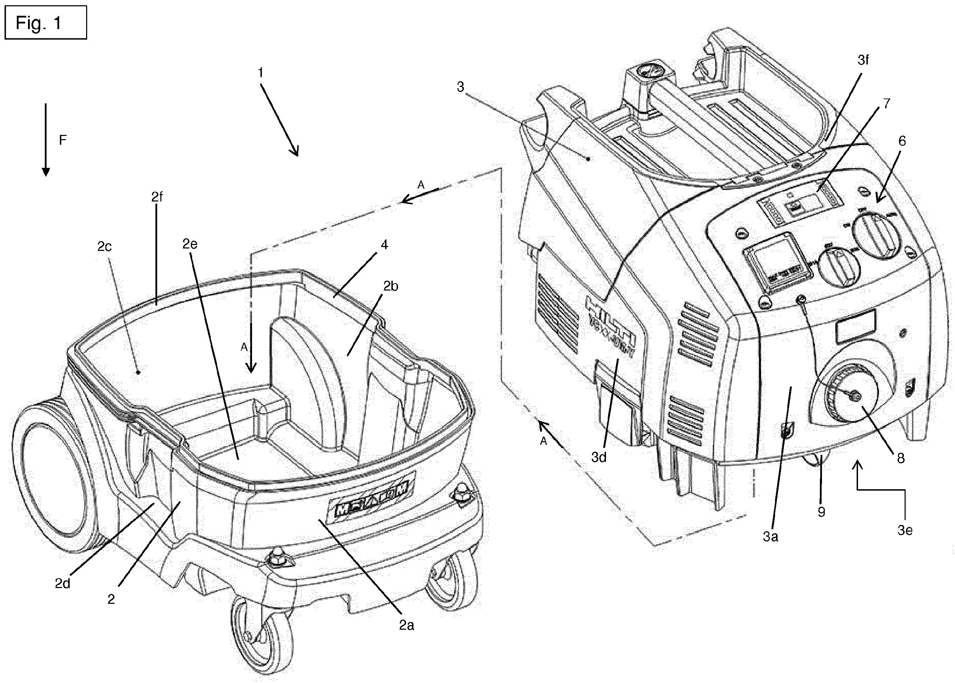

Fig. 1 zeigt ein Wasseraufbereitungsgerät 1 in einem demontierten bzw. auseinandergebauten Zustand. Das Wasseraufbereitungsgerät 1 enthält im Wesentlichen einen Wasserspeicher 2 und einen Saugkopf 3. Der Saugkopf 3 kann auch als Gerätekopf bezeichnet werden.

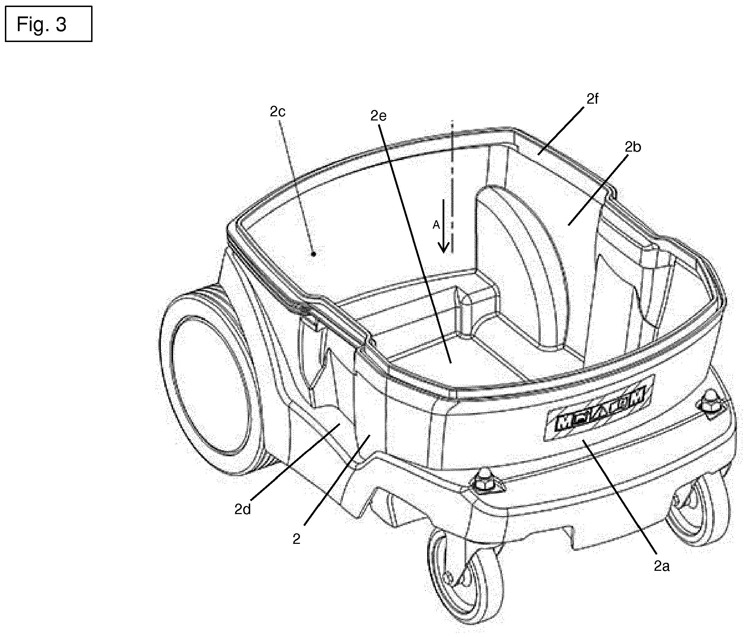

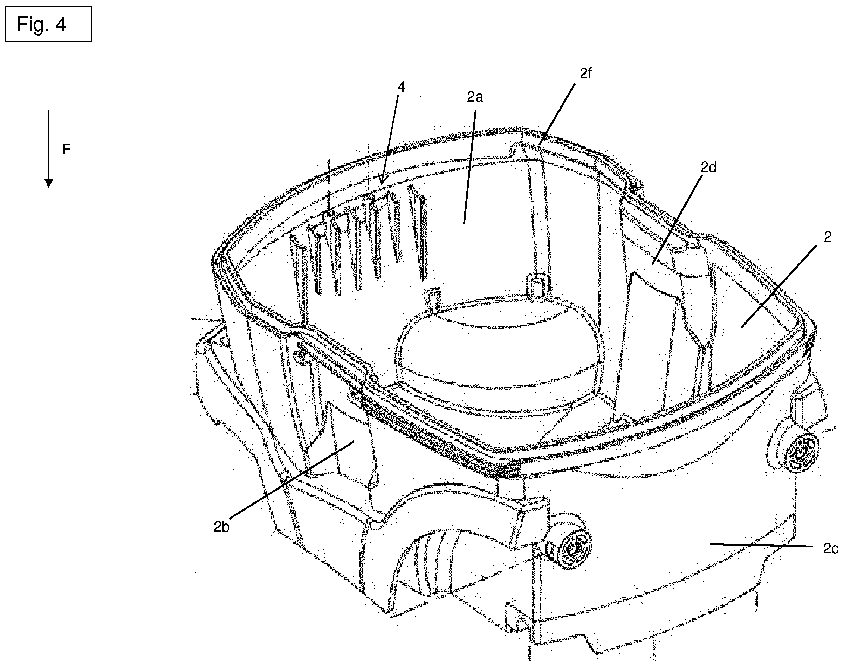

Wie in Fig. 1, 3 und 4 dargestellt, ist der Wasserspeicher 2 im Wesentlichen in Form einer Wanne ausgestaltet und dient dazu Wasser zu speichern bzw. aufzunehmen. Der Wasserspeicher 2 enthält eine erste, zweite, dritte, vierte Seitenwand 2a, 2b, 2c, 2d und einen Boden 2e. Des Weiteren enthält der Wasserspeicher 2 einen umlaufenden Rand 2f. An der Innenseite der ersten Seitenwand 2a ist eine Aufnahmevorrichtung 4 für einen Flanschhalteeinrichtung 5 positioniert. Sowohl die Aufnahmevorrichtung 4 als auch die Flanschhalteeinrichtung 5 werden nachfolgend im Detail beschrieben.

An der Unterseite des Wasserspeichers 2 sind vier Räder vorgesehen, mit denen der Wasserspeicher 2 bzw. im zusammengebauten Zustand das gesamte Wasseraufbereitungsgerät 1 bewegt werden kann.

In dem zusammengebauten Zustand ist der Saugkopf 3 auf dem Wasserspeicher 2 positioniert und lösbar mit dem Wasserspeicher 2 verbunden.

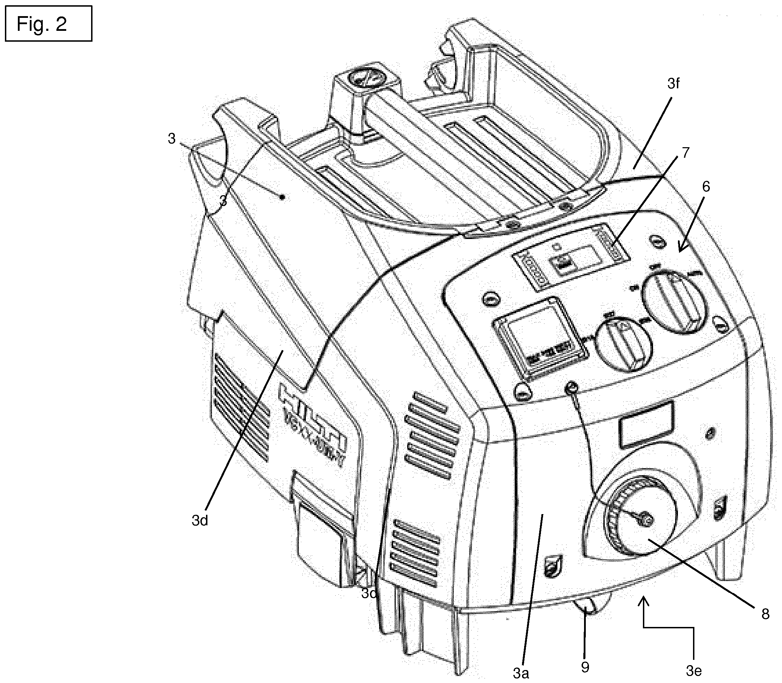

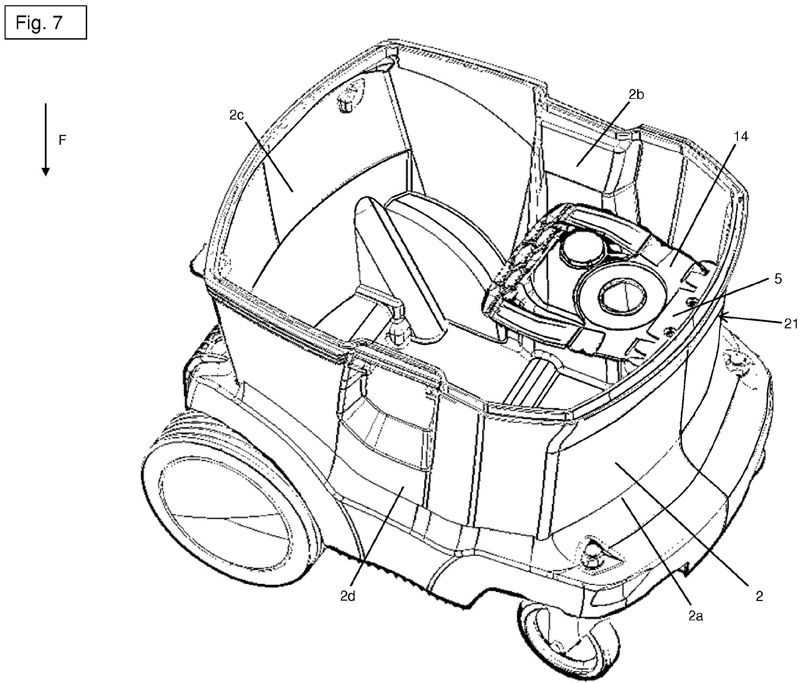

Wie in den Fig. 1 und 2 gezeigt, enthält der Saugkopf 3 eine erste, zweite, dritte, vierte Seitenwand 3a, 3b, 3c, 3d eine Unterseite 3e und einen Deckel 3f. Des Weiteren enthält der Saugkopf 3 eine Pumpe, mit der Wasser gepumpt werden kann. Es ist jedoch auch möglich, dass mehr als eine Pumpe in dem Wasseraufbereitungsgerät 1 enthalten ist. Die Pumpe ist in den Figuren nicht dargestellt. An der ersten Seitenwand sind verschiedene Bedienelemente 6, eine Anzeigeeinrichtung 7 sowie ein Wasseranschluss 8 für das verschmutzte Wasser von den nicht gezeigten Werkzeugmaschinen vorgesehen. Der Wasseranschluss 8 führt zu einer (nicht dargestellten) Leitung, die schließlich in einen Einfüllstutzen 9 an der Unterseite 3e des Saugkopfes 3 mündet (vgl. Fig. 2). Wie in den Fig. 7, 8 und 9 gezeigt, ist der Einfüllstutzen 9 in Form eines zylindrischen Rohrs verwirklicht. Des Weiteren ist an der Unterseite 3e des Saugkopfes 3 ein Sensor 10 in Form eines Magnetsensors positioniert. Im gezeigten Ausführungsbeispiel handelt es sich bei dem Sensor 10 um einen Hall-Sensor. Der Sensor 10 dient dazu, ein Signal eines Magneten 11, d.h. ein Magnetfeld, zu erfassen und ist in Pfeilrichtung E neben dem Einfüllstutzen 9 positioniert. Der Sensor 10 ist mit einer nicht gezeigten Steuerungseinheit in dem Saugkopf 3 verbunden. Wenn der Sensor 10 das Signal eines Signalgebers erfasst bzw. empfängt, sendet der Sensor 10 das erfasste Signal an die Steuerungseinheit. Entsprechend dem empfangenen Signal, wird das Wasseraufbereitungsgerät 1 von der Steuerungseinheit entweder in einen Arbeitsmodus oder in einen Ruhemodus geschaltet. In dem Arbeitsmodus wird Wasser mit Hilfe der Pumpe aus dem Wasserspeicher zu Werkzeugmaschinen, die mit dem Wasseraufbereitungsgerät 1 verbunden sind, gefördert. Anschließend wird das Wasser mit Hilfe der Pumpe wieder von den Werkzeugmaschinen zurückgefördert und in einer Filtereinrichtung 13 gefiltert. Das gefilterte Wasser gelangt anschließend wieder in den Wasserspeicher 2, sodass das gefilterte Wasser wieder zu den Werkzeugenmaschinen gefördert werden kann. Das Wasser bewegt sich in einem Kreislauf zwischen den Werkzeugmaschinen und dem Wasseraufbereitungsgerät 1. In dem Ruhemodus wird kein Wasser von der Pumpe gefördert. Sowohl der Arbeitsmodus als auch der Ruhemodus wird an der Anzeigeeinrichtung 7 optisch und/oder akustisch angezeigt. Es ist jedoch auch möglich, dass das Wasseraufbereitungsgerät 1 zusätzliche Modi neben dem Arbeitsmodus und dem Ruhemodus enthält. So ist es beispielsweise möglich, dass das Wasseraufbereitungsgerät 1 einen Modus aufweist, bei dem lediglich Wasser aus dem Wasserspeicher 2 zu den Werkzeugmaschinen gefördert wird, jedoch anschließend nicht zu dem Wasseraufbereitungsgerät 1 zurückbefördert wird. In diesem Modus ist keine Filtereinrichtung 13 in dem Wasseraufbereitungsgerät 1 notwendig, sie kann jedoch auch im Wasseraufbereitungsgerät 1 vorhanden bleiben.

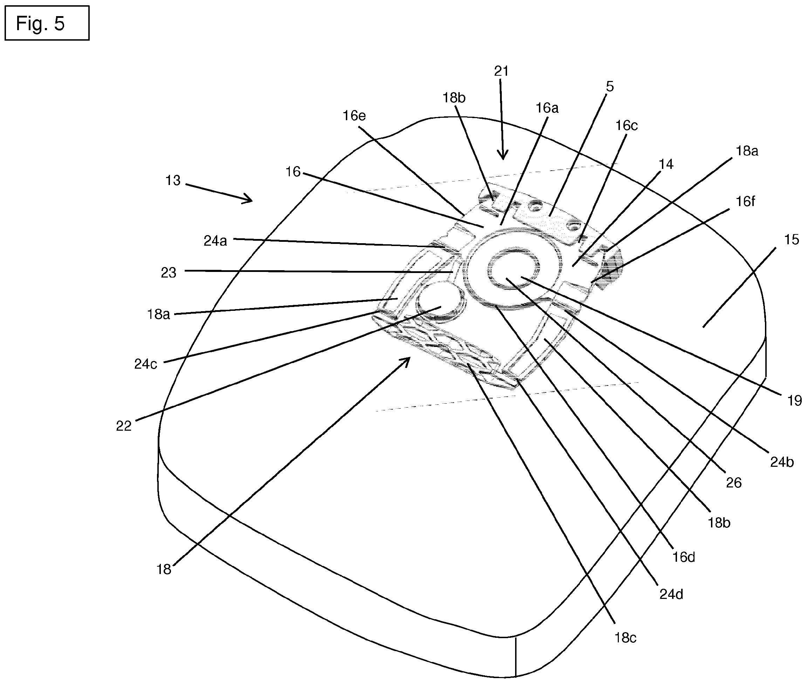

Im Inneren des Wasserspeichers 2 kann die Filtereinrichtung 13 positioniert werden. Wie in Fig. 5 gezeigt enthält die Filtereinrichtung 13 im Wesentlichen eine Flanscheinrichtung 14 und einen Filterbeutel 15. Der Filterbeutel 15 kann auch als Filtersack bezeichnet werden. Wie bereits vorstehend beschrieben dient die Filtereinrichtung 13 dazu, das Wasser zu filtern, welches von den Werkzeugmaschinen bzw. den Werkzeugen, z.B. Bohrkrone oder Sägeblatt, zurück in das Wasseraufbereitungsgerät 1 gefördert wi6rd. Das Wasser kann hierzu durch das Material des Filterbeutels 15 hindurch strömen wogegen der Schmutz in dem Material des Filterbeutels 15 zurückbleibt.

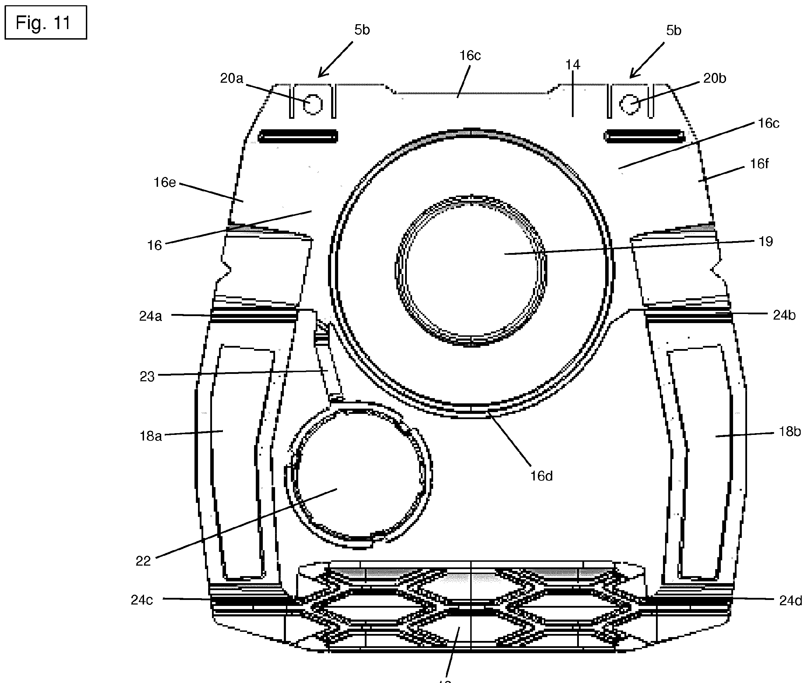

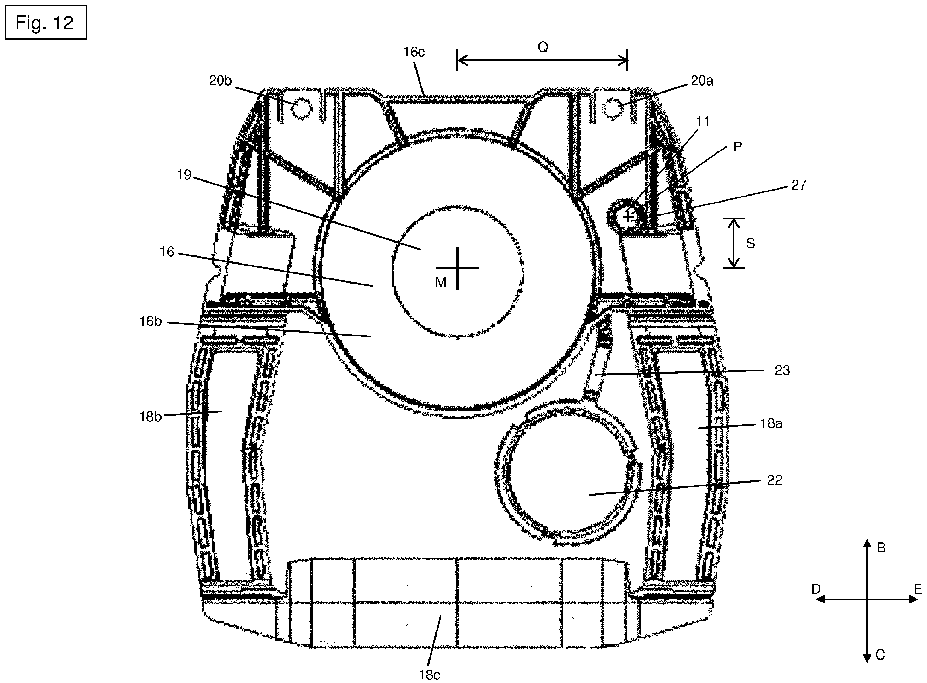

Wie in den Fig. 11 und 12 gezeigt, enthält die Flanscheinrichtung 14 im Wesentlichen eine Grundplatte 16 mit einer Oberseite 16a, einer Unterseite 16b, einer Vorderkante 16c, einer Hinterkante 16d, eine erste Seitenkante 16e, eine zweite Seitenkante 16f und eine Handgriffeinrichtung 18. In der Mitte der Grundplatte 16 befindet sich eine zentrale, kreisrunde Aussparung 19. Die Aussparung 19 kann auch als Loch bezeichnet werden. Die Aussparung 19 dient zur Aufnahme des Einfüllstutzens 9 des Saugkopfes 3, sodass über den Einfüllstutzen 9 und durch die Aussparung 19 das verschmutzte Wasser der Werkzeugmaschinen in die Filtereinrichtung 13 gelangen kann. An den beiden äußeren Enden der Vorderkante 16c sind ein erstes Anbindungselement 20a und ein zweites Anbindungselement 20b vorgesehen. Sowohl das erste als auch das zweite Anbindungselement 20a, 20b sind Bestandteil einer Verbindungseinrichtung 21, mit der die Flanscheinrichtung 14 der Filtereinrichtung 13 an die Flanschhalteeinrichtung 5 des Wasserspeichers 2 lösbar verbunden werden kann. Die Verbindungseinrichtung 21 ist im Wesentlichen in Form einer Schnappverbindung ausgestaltet. Des Weiteren ist ein Verschlusselement 22 zum Verschließen der Aussparung 19 an der Flanscheinrichtung 14 vorgesehen. Das Verschlusselement 22 ist mittels eines länglichen Verbindungsstegs 23 mit der Grundplatte 16 verbunden. Der Verbindungssteg 23 ist flexibel ausgestaltet und wenigstens so lang, dass das Verschlusselement 22 neben der Grundplatte 16 positioniert werden kann, wenn die Aussparung 19 nicht verschlossen werden soll.

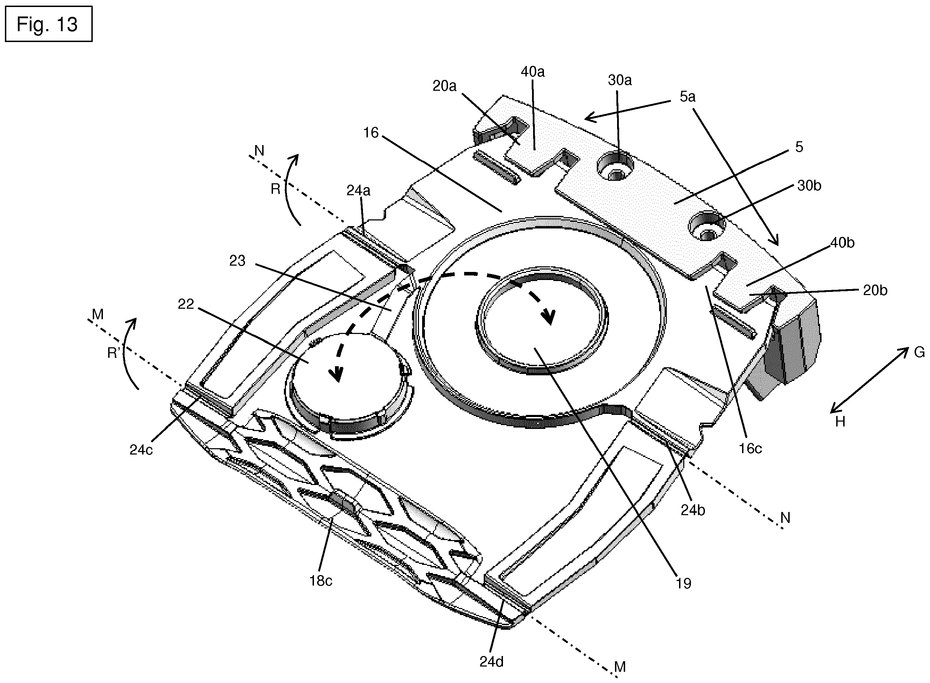

Die Handgriffeinrichtung 18 dient zum Ablösen der Verbindungseinrichtung 21 aus der Flanschhalteeinrichtung 5 und zum Tragen der Filtereinrichtung 13. Die Handgriffeinrichtung 18 enthält ein erstes Armelement 18a, ein zweites Armelement 18b sowie ein Griffelement 18c, wobei das erste Armelement 18a an einem ersten Ende über ein erstes Scharnier 24a und das zweite Armelement 18b an einem ersten Ende mit einem zweiten Scharnier 24b mit der Grundplatte 16 beweglich verbunden ist und wobei das erste Armelement 18a an einem zweiten Ende über ein drittes Scharnier 24c und das zweite Armelement 18b an einem zweiten Ende mit einem vierten Scharnier 24d mit dem Griffelement 18c beweglich verbunden ist. Die Scharniere 24a, 24b, 24c, 24d sind als Filmscharniere ausgestaltet. Wie in Fig. 13 gezeigt, kann das erste und zweite Armelement 18a, 18b mit Hilfe des ersten bzw. zweiten Scharniers 24a, 24b relativ zu der Grundplatte 16 um die Drehachse N und in Richtung R reversibel geschwenkt bzw. gedreht werden. Des Weiteren kann das Griffelement 18c mit Hilfe des dritten und vierten Scharniers 24c, 24d relativ zu dem ersten und zweiten Armelement 18a, 18b um die Drehachse M und in Richtung R' reversibel geschwenkt bzw. gedreht werden.

Darüber hinaus ist auf der Oberseite 16a der Grundplatte 16 eine Endpositionsanzeige 25 vorgesehen. Die Endpositionsanzeige 25 enthält einen ersten Längssteg 25a und einen zweiten Längssteg 25b, wobei sowohl der erste als auch der zweite Längssteg 25a, 25b so auf der Grundplatte angeordnet sind, dass der erste und zweite Längssteg 25a, 25b an einer Flanschhaltevorrichtung 5 des Wasserspeichers 2 angrenzen, wenn die Flanscheinrichtung 14 in der Flanschhaltevorrichtung 5 positioniert ist.

Der Filterbeutel 15 ist aus einem flexiblen Stoff gefertigt, durch den Wasser aber keine Schmutzpartikel gelangen können. Der Filterbeutel 15 enthält eine kreisrunde Öffnung 26 und ist an der Unterseite 16b der Grundplatte 16 der Flanscheinrichtung 14 befestigt. Die Öffnung 26 dient zur Aufnahme des Einfüllstutzens 9 des Saugkopfes 3, sodass das verschmutzte Wasser in das Innere des Filterbeutels 15 gelangen kann. Die kreisrunde Öffnung 26 des Filterbeutels 15 ist dabei unterhalb der zentralen, kreisrunden Aussparung 19 der Grundplatte 16 angeordnet, sodass sich die Öffnung 26 und die Aussparung 19 überdecken. Die Öffnung 26 des Filterbeutels 15 ist dabei im Durchmesser kleiner als der Durchmesser der Aussparung 19 der Flanscheinrichtung 14. Der Durchmesser der Öffnung 26 entspricht dabei im Wesentlichen dem Durchmesser des Einfüllstutzens 9 des Saugkopfes 3. Das in die Aussparung 19 ragende Filterbeutelmaterial dient dabei als Abdichtung zwischen dem Einfüllstutzen 9 und der Aussparung 19 der Flanscheinrichtung 14, wenn die Filtereinrichtung 13 mit dem Saugkopf 3 verbunden ist.

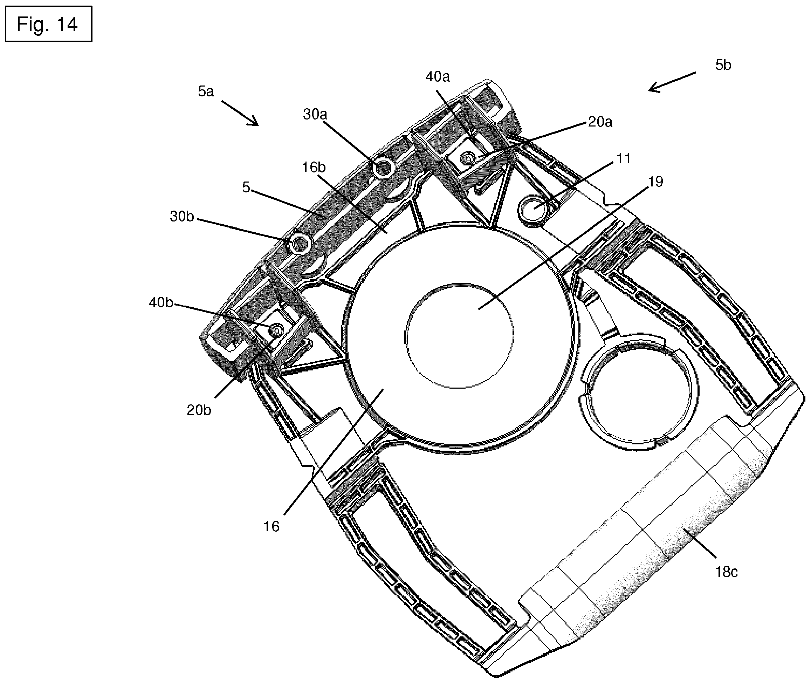

Wie in Fig. 12 und 14 gezeigt, enthält die Grundplatte 16 an der Unterseite 16b eine kreisrunde Aufnahme 27 für einen Signalgeber. Der Signalgeber ist in Form des kreisrunden Magneten 11 ausgestaltet und ist in der Aufnahme 27 positioniert. Der als Magneten ausgestaltete Signalgeber 11 hat eine kreisrunde Querschnittsfläche und einen Mittelpunkt P. Die kreisrunde Aussparung 19 der Grundplatte 16 weist ebenfalls eine kreisrunde Querschnittsfläche auf mit einem Mittelpunkt M. Der Mittelpunkt P weist einen Abstand von 16 mm in Pfeilrichtung B, d.h. Wegstrecke S, und einen Abstand von 50 mm in Pfeilrichtung D, d.h. Wegstrecke Q, zu dem Mittelpunkt M auf. In einem zusammengebauten Zustand, d.h. wenn sich die Filtereinrichtung 13 in dem Wasserspeicher 2 befindet und sich der Saugkopf 3 auf dem Wasserspeicher 2 befindet, ist der Magnet 11 in Richtung F unterhalb von dem Sensor 10 des Saugkopfs 3 positioniert, sodass der Sensor 10 den Magneten 11 bzw. Signale des Magneten 11 erfassen kann.

Die Stärke der Grundplatte 16 und die magnetische Kraft des Magneten 11 sind dabei so gewählt, dass das Magnetfeld des Magneten 11 durch die Grundplatte 16 hindurch und in ausreichender Stärke zu dem Sensor 10 gelangen kann.

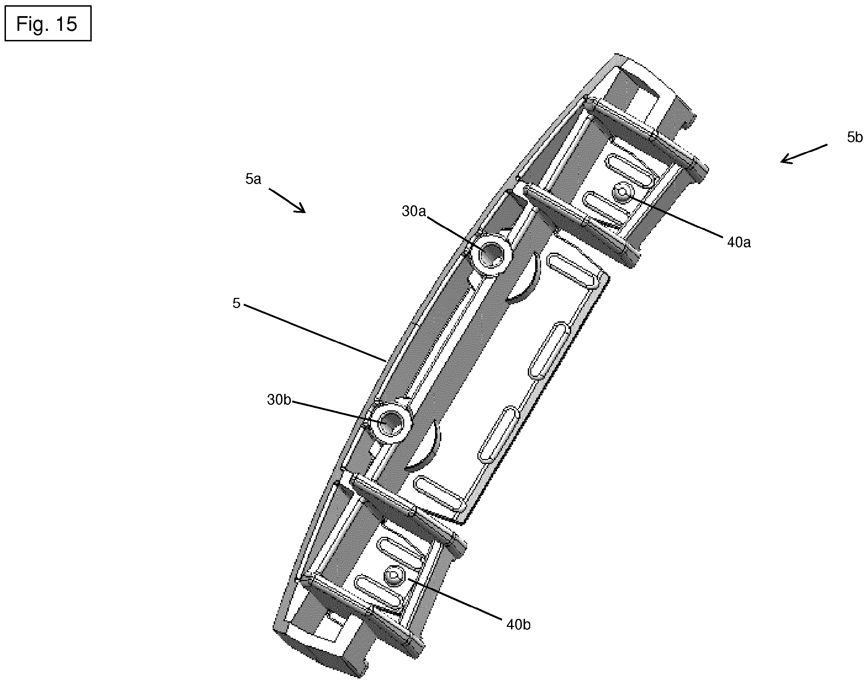

Wie in Fig. 15 gezeigt, enthält die Flanschhalteeinrichtung 5 eine erste Halteeinrichtung 5a und eine zweite Halteeinrichtung 5b. Die erste Halteeinrichtung 5a enthält zwei Aufnahmeelemente 30a, 30b und dient zur Befestigung an der Aufnahmevorrichtung 4. Die zwei Aufnahmeelemente 30a, 30b werden in zwei entsprechende Stifte der Aufnahmevorrichtung 4 in Pfeilrichtung F gesteckt. Die zweite Halteeinrichtung 5b weist zwei Aufnahmeelemente 40a, 40b auf, in die jeweils das erste und zweite Anbindungselement 20a, 20b positioniert werden kann. Die zwei Aufnahmeelemente 40a, 40b sind ebenfalls Bestandteil des zuvor beschriebenen Verbindungssystems 21, mit dem die Flanscheinrichtung 14 der Filtereinrichtung 13 an die Flanschhalteeinrichtung 5 des Wasserspeichers 2 lösbar verbunden werden kann.

### Montage und Funktionsweise der Filtereinrichtunq 13:

Um die Filtereinrichtung 13 in dem Wasseraufbereitungsgerät zu positionieren, wird zunächst der Saugkopf entgegen der Richtung A von dem Wasserspeicher entfernt (vgl. Fig. 1).

Die Flanschhalteeinrichtung 5 ist an der Aufnahmevorrichtung 4 in Pfeilrichtung F gesteckt.

Die Flanscheinrichtung 14 der Filtereinrichtung 13 wird an der Flanschhalteeinrichtung 5 befestigt. In den Fig. 13 und 14 ist die Flanscheinrichtung 14 in einem zusammengesteckten Zustand mit der Flanschhalteeinrichtung 5. Die Filtereinrichtung 13 befindet sich damit im Wasserspeicher 2.

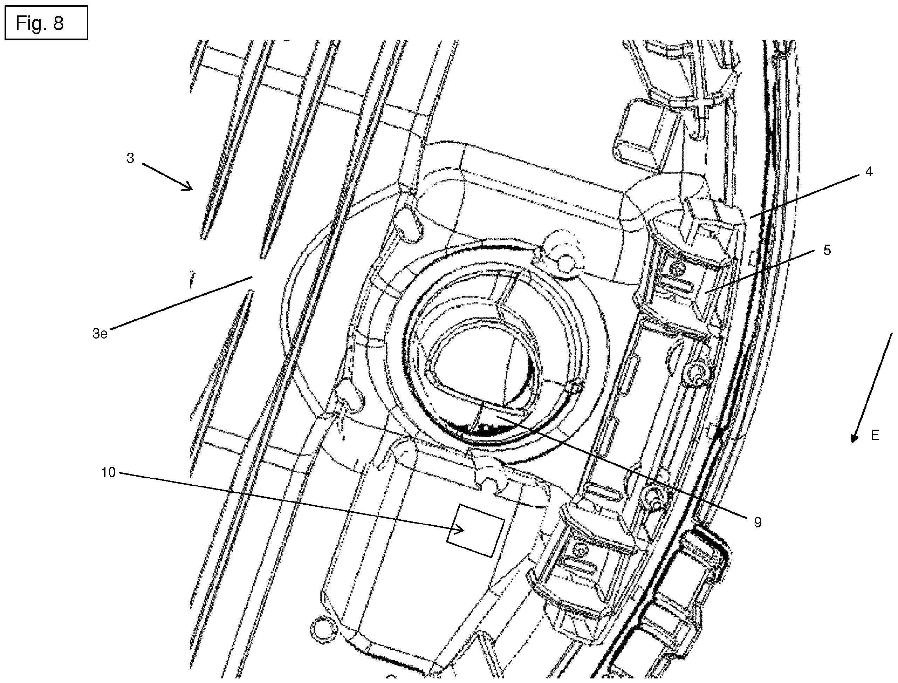

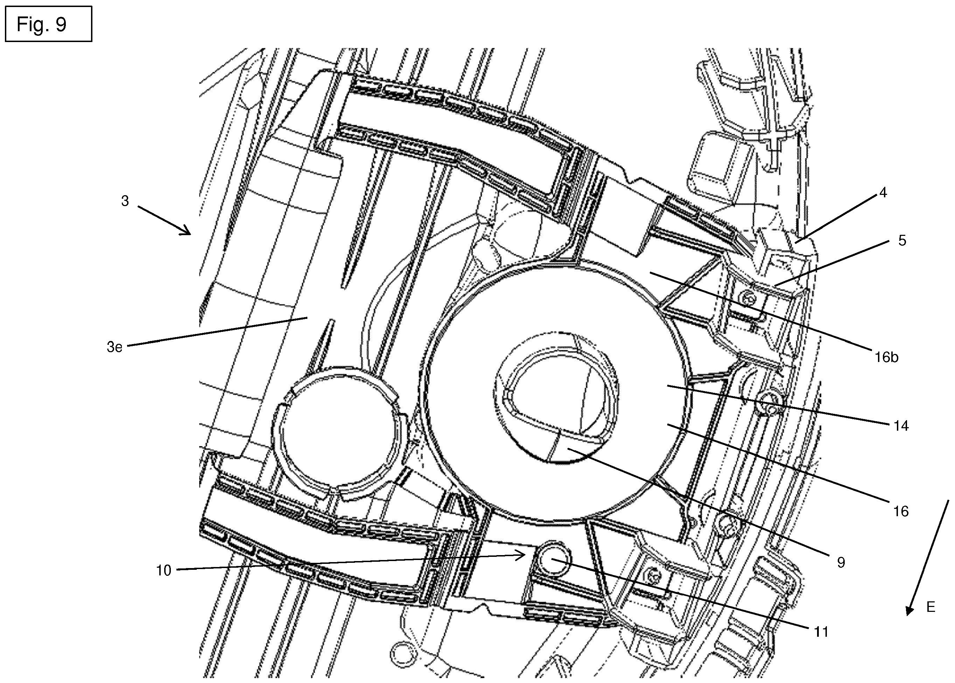

Anschließend wir der Saugkopf 3 wieder auf den Wasserspeicher 2 positioniert und befestigt. Der Sensor 10 in dem Saugkopf 3 befindet sich im zusammengebauten Zustand des Wasseraufbereitungsgeräts 1 entgegen der Pfeilrichtung F oberhalb des als Magneten 11 ausgestalteten Signalgebers (vgl. Fig. 8 und 9), um die Signale des Signalgebers, d.h. das Magnetfeld, zu erfassen. Wenn das Magnetfeld, d.h. Signal, des als Magneten 11 ausgestalteten Signalgebers von dem Sensor 10 erfasst wird, wird ein entsprechendes Signal an die Steuerungseinheit gesendet und der Arbeitsmodus für das Wasseraufbereitungsgerät 1 wird eingestellt. Wenn kein Signal von dem Sensor 10 erfasst wird, wird kein entsprechendes Signal an die Steuerungseinheit gesendet und der Ruhemodus für das Wasseraufbereitungsgerät 1 wird eingestellt.

## Patentansprüche

1. Flanscheinrichtung (14) für eine Filtereinrichtung (13) zum Positionieren in einem Wasseraufbereitungsgerät (1), wobei das Wasseraufbereitungsgerät (1) einen Wasserspeicher (2) sowie einen Saugkopf (3) enthält, wobei die Flanscheinrichtung (14) folgende Merkmale enthält:
- eine Grundplatte (16) mit einer zentralen Aussparung (19) zur Aufnahme eines Einfüllstutzens (9) des Saugkopfes (3),
- eine Verbindungseinrichtung (21) zum lösbaren Verbinden der Flanscheinrichtung (14) an einer Innenseite des Wasserspeichers (2),
- ein Verschlusselement (22) zum Verschließen der Aussparung (19), und
- eine Handgriffeinrichtung (18) zum Ablösen der Verbindungseinrichtung (21) aus der Flanschhalteeinrichtung (5) und zum Tragen der Filtereinrichtung (13),
wobei die Handgriffeinrichtung (18) ein erstes Armelement (18a), ein zweites Armelement (18b) sowie ein Griffelement (18c) enthält, wobei das erste Armelement (18a) an einem ersten Ende über ein erstes Scharnier (24a) und das zweite Armelement (18b) an einem ersten Ende mit einem zweiten Scharnier (24b) mit der Grundplatte (16) beweglich verbunden ist und
wobei das erste Armelement (18a) an einem zweiten Ende über ein drittes Scharnier (24c) und das zweite Armelement (18b) an einem zweiten Ende mit einem vierten Scharnier (24d) mit dem Griffelement (18c) beweglich verbunden ist.

2. Flanscheinrichtung (14) nach Anspruch 1,
**gekennzeichnet durch** eine Endpositionsanzeige (25) enthaltend einen ersten Längssteg (25a) und einen zweiten Längssteg (25b), wobei sowohl der erste als auch der zweite Längssteg (25a, 25b) so auf der Grundplatte (16) angeordnet sind, dass der erste und zweite Längssteg (25a, 25b) an einer Flanschhaltevorrichtung (5) des Wasserspeichers (2) angrenzen, wenn die Flanscheinrichtung (14) in der Flanschhaltevorrichtung (5) positioniert ist.

## Claims

1. Flange device (14) for a filter device (13) for positioning in a water treatment unit (1), wherein the water treatment unit (1) contains a water reservoir (2) and a suction head (3),
wherein the flange device (14) contains the following features:
- a base plate (16) with a central cutout (19) for receiving a filler neck (9) of the suction head (3),
- a connecting device (21) for releasable connection of the flange device (14) to an inner side of the water reservoir (2),
- a closure element (22) for closing off the cut-out (19), and
- a handle device (18) for detaching the connecting device (21) from the flange holding device (5) and for carrying the filter device (13),
wherein the handle device (18) contains a first arm element (18a), a second arm element (18b) and a grip element (18c), wherein the first arm element (18a) is connected movably to the base plate (16) at a first end via a first hinge (24a) and the second arm element (18b) is connected movably to said base plate at a first end by way of a second hinge (24b), and
wherein the first arm element (18a) is connected movably to the grip element (18c) at a second end via a third hinge (24c) and the second arm element (18b) is connected movably to said grip element at a second end by way of a fourth hinge (24d).

2. Flange device (14) according to Claim 1,
**characterized by** an end position indicator (25) containing a first longitudinal web (25a) and a second longitudinal web (25b), wherein the first and second longitudinal webs (25a, 25b) are arranged on the base plate (16) in such a way that the first and second longitudinal webs (25a, 25b) adjoin a flange holding device (5) of the water reservoir (2) when the flange device (14) is positioned in the flange holding device (5).

## Revendications

1. Dispositif formant bride (14) destiné à un dispositif de filtration (13) à positionner dans une unité de traitement d'eau (1), l'unité de traitement d'eau (1) contenant un réservoir d'eau (2) et une tête d'aspiration (3),
le dispositif formant bride (14) présentant les caractéristiques suivantes :
- une plaque de base (16) pourvue d'un évidement central (19) destinée à recevoir une tubulure de remplissage (9) de la tête d'aspiration (3),
- un dispositif de liaison (21) destiné à relier de manière amovible le dispositif formant bride (14) à un côté intérieur du réservoir d'eau (2),
- un élément de fermeture (22) destiné à fermer l'évidement (19), et
- un dispositif formant poignée (18) destiné à détacher le dispositif de liaison (21) du dispositif de retenue de bride (5) et à porter le dispositif de filtration (13),
le dispositif formant poignée (18) comportant un premier élément de bras (18a), un deuxième élément de bras (18b) et un élément de préhension (18c), le premier élément de bras (18a) étant relié de manière mobile à la plaque de base (16) au niveau d'une première extrémité par le biais d'une première charnière (24a) et le deuxième élément de bras (18b) étant relié de manière mobile à la plaque de base (16) au niveau d'une première extrémité par le biais d'une deuxième charnière (24b) et
le premier élément de bras (18a) étant relié de manière mobile à l'élément de préhension (18c) au niveau d'une deuxième extrémité par le biais d'une troisième charnière (24c) et le deuxième élément de bras (18b) étant relié de manière mobile à l'élément de préhension (18c) au niveau d'une deuxième extrémité par le biais d'une quatrième charnière (24d).

2. Dispositif formant bride (14) selon la revendication 1,
**caractérisé par** un indicateur de position finale (25) comportant une première nervure longitudinale (25a) et une deuxième nervure longitudinale (25b), les première et deuxième nervures longitudinales (25a, 25b) étant disposées sur la plaque de base (16) de manière à ce que les première et deuxième nervures longitudinales (25a, 25b) soient adjacentes à un dispositif de retenue de bride (5) du réservoir d'eau (2) lorsque le dispositif formant bride (14) est positionné dans le dispositif de retenue de bride (5).
